# EUROPÄISCHE PATENTSCHRIFT

(11) **EP 1 811 170 B1**
(45) Veröffentlichungstag und Bekanntmachung des Hinweises auf die Patenterteilung: **19.12.2018**
(21) Anmeldenummer: 07100730.6
(22) Anmeldetag: 18.01.2007
(51) Int. Cl.: F03B 7/00, F03B 17/06

(54) **Einrichtung zur Nutzung von Wasserkraft bei der Energiegewinnung**
Device for using water power for energy generation
Dispositif destiné à l'utilisation de la force hydraulique dans le gain d'énergie

(30) Priorität: 20.01.2006 DE 102006003099
(43) Veröffentlichungstag der Anmeldung: 25.07.2007
(73) Patentinhaber: Seidel, Christian, 38114 Braunschweig (DE)
(72) Erfinder: Seidel, Christian, 38114 Braunschweig (DE)
(74) Vertreter: Einsel, Martin

(56) Entgegenhaltungen:
- AU-A- 1 289 192
- DE-A1- 10 218 443
- DE-A1- 10 324 791
- DK-C- 2 072
- US-A- 5 082 423
- US-A- 5 440 175
- US-B1- 6 616 403

## Beschreibung

Die Erfindung betrifft eine Einrichtung zur Nutzung von Wasserkraft bei der Energiegewinnung, mit einem Schaufelwasserrad mit einer Welle und mit an der Welle mittelbar oder unmittelbar angeordneten und mit dieser drehbaren Schaufel, die vom fließenden Wasser in eine Drehbewegung um die Achse der Welle versetzbar sind, mit Lagern für die Welle des Schaufelwasserrades auf beiden Seiten des fließenden Wassers, und mit einer Vorrichtung zur Abnahme der kinetischen Energie der sich drehenden Welle und zur mittelbaren oder unmittelbaren Übertragung zu einer Umwandlungsvorrichtung in eine andere Energieform.

Bereits seit vielen Jahrhunderten werden Einrichtungen zur Nutzung von Wasserkraft bei der Energiegewinnung eingesetzt. Bekannt sind Schaufelwasserräder, wie sie schon seit langem etwa bei Wassermühlen verwendet werden. Derartige Wasserräder sind für Durchflussmengen der zur Verfügung stehenden Gewässer bis zu maximal 6 m³/s geeignet. Nachdem sie über eine lange Zeit die praktisch einzige gewerbliche Nutzung von Wasserkraft darstellten, wurden sie aufgrund ihrer beschränkten Möglichkeiten im 20. Jahrhundert von Wasserturbinen weitgehend verdrängt. Um insbesondere große Fallhöhen und große Durchflussmengen zu erhalten und zu nutzen wurden gerade auch zu diesem Zweck Stauseen angelegt und die entstehenden Höhenunterschiede und dadurch mögliche Fallhöhen und große Durchflussmengen genutzt, um Turbinen anzutreiben. Auch der Ausbau der Wasserkraft an den großen Flüssen, die über große Durchflussmengen verfügen, wurde über die Errichtung von Stauanlagen mit möglichst großen Fallhöhen umgesetzt, um Turbinen betreiben zu können.

Wasserturbinen sind für diese Verwendungszwecke auch recht gut geeignet, sie haben jedoch keine Möglichkeit, effektiv auch bei relativ kleinen Fallhöhen von etwa unterhalb drei Metern eine wirtschaftlich sinnvolle Nutzung der Wasserkraft herbeizuführen.

Für lokale Energiegewinnung etwa an Bächen greift man gerne auf Laufwasserkraftwerke mit Schaufelwasserrädern zurück, die in einer Reihe von Vorschlägen auch schon für diese Zwecke verbessert wurden. Zu nennen ist beispielsweise die DE 39 38 748 C2, bei der auch Kleinwasserreserven mit kleinem Volumenstrom und kleinem Gefälle besser benutzt werden sollen, in dem die Wasserführung an den Schaufeln künstlich verengt und verbessert wird.

In ähnlicher Form möchte die DE 37 35 841 A1 aufgestautes Wasser mit speziell geformten Schaufeln effektiver nutzen. Die FR 2 847 621 A1 schlägt ein Schaufelwasserrad vor, bei dem die Schaufeln mit kippbaren Stangen und Schäften ausgerüstet sind und die Schaufeln sich während der Drehung des Schaufelwasserrades relativ bewegen können und mit einem relativ kompliziert aufgebauten feststehenden Teil zusammenwirken.

Aus der DE 88 676 C ist eine Wasserkraftanlage zur Ausnutzung der Bewegung von Gezeitenwasser bekannt. In dem Wasser schwimmt ein Ponton, der durch Ebbe und Flut jeweils mit dem Wasserspiegel angehoben und abgesenkt wird. Innerhalb des Pontons befindet sich eine Kammer, durch die Wasser entsprechend der Strömungsrichtung von Ebbe und Flut über eine recht komplizierte Konstruktion hindurch strömen kann, um ein dort gelagertes Wasserrad anzutreiben, das auf diese Weise von dem durch Ebbe und Flut gegebenen Wasserstand unabhängig ist.

Eine weitere Schwimmkonstruktion ist aus der DK 2072 C bekannt. Hier sind leichte Stoßräder auf Stahlböcken gelagert, die wiederum in offene Pontons gestellt sind. Die Lagerung der Stoßräder erfolgt innerhalb des fließenden Wassers. Das Wasserrad nutzt allein die Bewegungsenergie des Gewässers.

Aus der US-PS 5,440,175 ist ein Wasserrad mit einem Zellenkranz bekannt. Das Wasserrad wird von oben mittels zwei Kragarmen in ein Gewässer herabgelassen. Die Drehung des Zellenwasserrades soll durch ein Planetengetriebe im Inneren des Zellenkranzes übertragen und in elektrische Energie umgewandelt werden.

Für eine gewerbliche Nutzung des zur Verfügung stehenden Wasserkraftpotentials sind alle bekannten Vorschläge nicht geeignet. Zur Verfügung stehen nämlich neben den für Turbinen geeigneten Strömungen mit großen Fallhöhen unter anderem auch Flachlandgewässer, die relativ geringe Höhenunterschiede überwinden müssen, dafür aber relativ große oder mittlere Durchflussmengen aufweisen. Es gibt an diesen Fließgewässern aus kulturbedingten Gründen eine Vielzahl von Staustufen, die im Zuge des Wasserstraßenausbaus, der Flussregulierung, des Hochwasserschutzes oder auch der historischen Wasserkraftnutzung entstanden sind.

Problematisch für eine gewerbliche Nutzung dieser Wasserkraft sind die relativ starken Schwankungen in den Durchflussmengen und auch die variablen Fallhöhen bedingt durch Hochwasser beziehungsweise Niedrigwasser im jahreszeitlichen Verlauf.

Die Problematik eines sich ändernden Wasserspiegels ist auch Gegenstand eines Vorschlages aus der CH 106 855 C. Vorgeschlagen wird eine Hebe- und Senkvorrichtung für Wasserräder. Eine Kegelradübersetzung dient dazu, eine Welle in senkrechter Richtung aufwärts und abwärts zu verschieben und so das Wasserrad auch bei sinkendem Wasserspiegel noch begrenzt betreiben zu können.

Die US 6,551,053 B1 beschreibt eine schwimmende Vorrichtung, die in einem breiten, fließenden Gewässer verankert werden kann. Sie besitzt von einer Plattform ausgehend zwei rotierende, jeweils einseitig gelagerte Schaufelräder, die über einen mehrfach umgelenkten Antrieb ihre Energie in Generatoren auf der Plattform übertragen.

Diese Konzeption ist für extrem breite Ströme in Grenzen brauchbar, um kleine Energiemengen zu gewinnen.

Die US 6,616,403 B1 beschreibt einen drehbaren, walzenförmigen Schwimmkörper, der mittels Haltestangen an einem im Wasser stehenden Mast befestigt und gehalten wird. Die Wasserströmung dreht den Schwimmkörper.

Dadurch wird ein Riementrieb betätigt, der einen elektrischen Generator antreiben soll.

Aus der AU-A-12891/92 ist ein weiteres schwimmendes Wasserrad bekannt, dessen Drehung als Antrieb für einen elektrischen Generator verwendet werden soll.

Problematisch ist auch die relativ hohe Nährstofffracht dieser Gewässer und ein einer gewerblichen Nutzung an sich entgegenstehendes vielfältig belebtes Biotop mit unter anderem relativ großen Fischbeständen.

Diese Vielzahl an Problemen, die sich für den Fachmann ganz offensichtlich einer gewerblichen Nutzung entgegenstellen, hat dazu geführt, dass trotz der vorhandenen Wasserkraftpotentiale in diesen Fließgewässern keinerlei gewerbliche Nutzung stattgefunden hat oder realistisch vorgeschlagen wurde.

Aufgabe der folgenden Erfindung ist es, hier Abhilfe zu schaffen und eine Einrichtung zur Nutzung von Wasserkraft bei der Energiegewinnung vorzuschlagen, die hier eine Nutzungsmöglichkeit schafft.

Diese Aufgabe wird gelöst durch eine Einrichtung zur Nutzung von Wasserkraft bei der Energiegewinnung, mit einem Schaufelwasserrad mit einer Welle und mit an der Welle mittelbar oder unmittelbar angeordneten und mit dieser drehbaren Schaufeln, die vom fließenden Wasser in eine Drehbewegung um die Achse der Welle versetzbar sind, mit Lagern für die Welle des Schaufelwasserrades platzierbar auf beiden Seiten auf dem Ufer des fließenden Wassers oder wasserführenden Querschnitts, mit einer Vorrichtung zur Abnahme der kinetischen Energie der sich drehenden Welle und zur mittelbaren oder unmittelbaren Übertragung zu einer Umwandlungsvorrichtung in eine andere Energieform, bei dem die Welle des Schaufelwasserrades als Hohlwelle ausgebildet ist, und bei dem die Vorrichtung zur Abnahme der kinetischen Energie zwischen den Lagern für die Welle des

Schaufelwasserrades als Hohlwelle ausgebildet ist, und bei dem die Vorrichtung zur Abnahme der kinetischen Energie zwischen den Lagern für die Welle des Schaufelwasserrades angeordnet ist.

Damit werden überraschend einige der für unlösbar gehaltenen Probleme überwunden.

Bisher galten nämlich Schaufelwasserräder für die angestrebten Zwecke als völlig ungeeignet. Der Grund dafür liegt darin, dass für ein Schaufelwasserrad nicht nur wie offensichtlich erkennbar Schaufeln benötigt werden, sondern auch eine Welle, an der die Schaufeln befestigt sind, die drehbar ist und die natürlich auf beiden Seiten des fließenden Wassers beziehungsweise Gewässers in irgendeiner Form gelagert sein muss. Bei Schaufelwasserrädern geschieht dies auf beiden Seiten etwa eines Baches, wobei die Welle zumindest auf einer Seite über das Lager weit hinausreicht und dort auf der anderen Seite des Lagers dann in geeigneter Form die kinetische Energie aus der Drehbewegung der Welle in geeigneter Form abgegriffen wird. Bei herkömmlichen Wassermühlen geschieht dies durch Umsetzung der Drehbewegung in die Drehung eines Mühlsteins zum Mahlen von Mehl, in fortschrittlicheren Stufen wird hier ein Generator angetrieben.

Möchte man nun eine ähnliche Konstruktion verwenden, um ein wesentlich größeres Gewässer zu überspannen, so würde durch die größere Länge nicht nur die Zahl und die Größe der Schaufeln zunehmen müssen, sondern auch der Durchmesser der Welle rapide ansteigen. Das würde wiederum zu einem sehr deutlich zunehmenden Gewicht und damit zu entsprechenden Anforderungen an die Lager führen, die realistisch nicht mehr zur Verfügung gestellt werden können. Man würde vielleicht zurückgreifen auf andere Lageranordnungen bei anderen Verwendungszwecken, wo man Verjüngungen der Wellen vornimmt und dann mittels Vorgelege auf der Abtriebsseite der Welle des Lagers versuchen, doch noch eine Lösung zu finden. Die gewaltigen Gewichte der Welle werden dies aber voraussichtlich sehr unwirtschaftlich machen.

Greift man dann zur Gewichtsreduzierung auf die Idee zurück, eine Hohlwelle einzusetzen, wie sie in ganz anderem Zusammenhang beispielsweise von der DE 27 22 171 A1 schon vorgebracht worden ist, so werden die erheblichen Drehmomente, die bei der in Aussicht genommenen großen Spannweite zwischen den Lagern entstehen, zu einer raschen Zerstörung des Vorgeleges und zu enormen Spannungen innerhalb der Schale der Hohlwelle im Bereich des Lagers führen. Die Torsionsmomente und Scherkräfte, die hier auftreten können, sind für jeden Fachmann abschreckend.

Die Merkmalskombination der Erfindung führt jedoch für den Fachmann überraschend zu einer Lösung.

Eingesetzt wird eine Hohlwelle. Dadurch wird das Gewichtsproblem unmittelbar gelöst. Auch die erfindungsgemäß bevorzugten geschweißten oder geschmiedeten Stahlrohre weisen als Hohlprofil Gewichte auf, die unproblematisch sind beziehungsweise gehandhabt werden können.

Die Vorrichtung zur Abnahme der kinetischen Energie wird jedoch anders als bei derartigen Wellen herkömmlich nicht mehr auf der Abtriebsseite der Welle auf der den Schaufeln abgewandten Seite der Lager angeordnet, sondern zwischen den beiden Lagern, bevorzugt natürlich möglichst dicht benachbart an einem der Lager.

Eine derartige Anordnung widerstrebt dem Fachmann zunächst ganz eindeutig. Er wird naturgemäß und nachvollziehbar versuchen, die Spannweite der Welle zwischen den beiden Lagern möglichst gering zu halten, also die beiden Lager möglichst dicht an den beiden Ufern des Gewässers aufzubauen, deren fließendes Wasser hier den Antrieb des Schaufelwasserrades vornehmen soll. Je kürzer der Fachmann die Spannweite beziehungsweise den Abstand der beiden Lager halten kann, desto weniger Verwindungen und Verbiegungen muss er berücksichtigen, desto leichter ist das Schaufelrad und desto weniger Gewicht müssen die Lager tragen. Erfindungsgemäß wird der Fachmann jetzt jedoch entgegen seinem Bestreben eines der beiden Lager nicht unmittelbar an das Ufer setzen, sondern noch etwas weiter landeinwärts, damit zwischen das Ufer und dieses Lager noch die Abnahmevorrichtung der kinetischen Energie angeordnet werden kann.

Die Spannweite der Welle wird also künstlich etwas größer gehalten, als dies an sich für dieses Gewässer erforderlich gewesen wäre. Dieser Nachteil wird jedoch mehr als wettgemacht durch den erfinderischen Vorteil, das nämlich die Abnahme der Energie unmittelbar auf der Seite der Welle erfolgt, auf der auch die Energie von den Schaufeln auf die Welle übertragen wird. Es gibt also keine Verwindungen oder sonstigen Probleme, die über die Lager übertragen werden müssen und es bereitet jetzt auch kein Problem mehr, die Lager tatsächlich sehr klein auszuführen, da sie mit der gesamten Kraftabnahme nichts mehr zu tun haben.

Der gesamte Verjüngungsvorgang der Wellen auf ihren beiden Seiten zum Ende hin findet außerhalb des Bereiches statt, an dem die Kraft zunächst in die Welle und dann wieder aus der Welle heraus während der Energiegewinnung übertragen wird.

Darüber hinaus sind die Kräfte und Drehmomente, die bei der Verarbeitung großer Durchflussmengen im niederen Fallhöhenbereich entstehen, so gewaltig, dass die Kraftabnahme nicht nur wie beschrieben von der unverjüngten Welle zwischen den Lagern erfolgen sollte, sondern auch eines vorzugsweise großen Kraftabnahmerades zur Abnahme der kinetischen Energie von der Welle bedarf. Das Kraftabnahmerad sollte dabei von der Größe des Durchmessers im Bereich der Größe des Durchmessers des Schaufelwasserrades liegen oder größer als dieses sein.

Eine derartige Ausführung widerstrebt dem Fachmann zunächst ganz eindeutig. Er wird naturgemäß und nachvollziehbar versuchen, von der Wahl eines so großen Kraftabnahmerades Abstand zu nehmen, da bei der bei Wasserrädern üblichen Verwendung eines Zahnrades als Kraftabnahmerad, die erforderliche Passgenauigkeit der Zähne zwischen dem großen Zahnrad und dem von diesem angetriebenen kleinen Zahnrad auf Grund des großen Raddurchmessers des Kraftabnahmerades nicht realisiert werden kann.

Klassisch würde nun der Fachmann anstelle des Zahnrades einen Riementrieb zur Kraftabnahme vom Wasserrad verwenden, den er aber auf Grund der gewaltigen zu handhabenden Drehmomente, die im Bereich der niederen Fallhöhen und großen Durchflussmengen auftreten, jedoch weniger gut einsetzen kann, da Riementriebe bekanntlich nur kleine Kräfte übertragen können.

Erfindungsgemäß wird der Fachmann jetzt jedoch bevorzugt entgegen seinem Bestreben ein so großes Kraftabnahmerad an einem Wasserrad als Kettenrad konstruieren, mit dem er nicht nur die entsprechenden Hebealarme zur Handhabung der gewaltigen Drehmomente realisiert und entsprechend große Zugkräfte übertragen werden können, sondern auch eine Technik zum Einsatz kommt, die einer geringeren Passgenauigkeit bedarf.

Doch auch dieser Schritt lässt sich noch optimieren, da die Verwendung herkömmlicher Ketten auf Grund ihrer engen Teilung bei so großen Kettenrädern eine sehr hohe Zähnezahl erfordern, die wiederum nur eine geringe Längung der Ketten zulassen, was einen schnellen Verschleiß der Kette bewirkt. Einem Fachmann widerstrebt eine derartige Ausführung daher zunächst ganz eindeutig. Er wird also naturgemäß und nachvollziehbar versuchen, auch von der Wahl einer Kette Abstand zu nehmen.

Erfindungsgemäß wird der Fachmann jetzt jedoch in einer bevorzugten Ausführungsform entgegen seinem Bestreben eine Doppelstrangkette als Übertragungsmittel von dem Kettenrad des Wasserrades zu einer Umwandlungsvorrichtung in eine andere Energieform oder zu einer mechanischen Vorrichtung, an die eine Umwandlungsvorrichtung in eine andere Energieform angeschlossen sein kann, verwenden. Die Doppelstrangkette, die zwei herkömmliche Ketten mittels Bolzen verbindet, bildet dabei die Kette für das große Kettenrad, wobei die Bolzen einen größeren Teilungsabstand als die herkömmlichen Ketten aufweisen, wodurch die erforderliche Zähnezahl erheblich reduziert wird. Durch dieses Vorgehen wird die zulässige Kettenlängung entscheidend heraufgesetzt, wodurch sich der Kettenverschleiß drastisch reduziert.

In einer weiter bevorzugten Ausführungsform kommt nun aber bei der Kraftabnahme des Wasserrades auch noch ein Segmentantrieb an Stelle des sonst vom Fachmann verwendeten Umschlingungsantriebes zum Einsatz, durch den die im Eingriff befindliche Zähnezahl weiter herabgesetzt wird, wodurch eine noch größere zulässige Kettenlängung zugelassen werden kann und der Kettenverschleiß weiter reduziert wird. Gleichzeitig wird durch dieses Vorgehen das Übersetzungsverhältnis der Drehzahl in der Kettentriebstufe besonders vorteilhaft erhöht, womit erfindungsgemäß die Heraufsetzung der sehr langsamen Drehzahl des Wasserrades auf eine wesentlich höhere Drehzahl erfolgt. Dies ist besonders nützlich für den effizienten Betrieb einer Umwandlungsvorrichtung in eine andere Energieform oder einer mechanischen Vorrichtung, an die eine Umwandlungsvorrichtung in eine andere Energieform angeschlossen sein kann, die stets mit wesentlich größeren Drehzahlen arbeiten als das Wasserrad selbst aufweist.

Erfindungsgemäß wird es möglich, auch Durchflüsse bei Gewässern praktisch zu nutzen, die im Fallhöhenbereich von 40 cm bis 8,5 m liegen. Dabei werden trotzdem hohe Wirkungsgrade erreicht. Versuche haben ergeben, dass die erfindungsgemäße Einrichtung auch bei Durchflussschwankungen von 10% bis zu etwa 150% arbeitsfähig bleibt. Selbst Schwankungen der Fallhöhe von bis zu 85% können hingenommen werden, was bei herkömmlichen, ohnehin nicht für derartige Anforderungen verwendbaren Schaufelwasserrädern im Regelfall zu einer Stilllegung führen muss.

Die Erfindung ist insbesondere für Durchflussmengen im Bereich zwischen 10 m³/s und 650 m³/s interessant.

Die Wirkungsgrade, die erreichbar sind, sind ganz erheblich und übertreffen die von klassischen Wasserrädern, die im Regelfall nur 70% bis 80% Wirkungsgrad haben.

Bewährt hat es sich bei Versuchen, wenn das verwendete Schaufelwasserrad eine Schaufelgeometrie nach so genannter Zuppinger Bauart einsetzt.

Ein wesentlicher Vorteil gegenüber Turbinen entsteht erfindungsgemäß auch dadurch, dass eine erhebliche Fischfreundlichkeit gegeben ist. Fische ebenso wie auch andere Wasserlebewesen können schadlos über die Anlage ins Unterwasser absteigen.

Ähnliches gilt nicht nur für Fische und Wasserlebewesen, sondern auch für möglicherweise im Wasser befindliche Holzstücke und vergleichbare biologische Substanzen, die den Betrieb des Schaufelwasserrades nicht beeinträchtigen können.

Im Folgenden wird anhand der Zeichnung ein Ausführungsbeispiel der Erfindung näher beschrieben. Es zeigen:
- Figur 1: eine schematische Seitenansicht, teilweise geschnitten, einer erfindungsgemäßen Ausführungsform im eingebauten Zustand;
- Figur 2: eine schematische Ansicht einer zweiten Ausführungsform in ähnlicher Darstellung wie in Figur 1;
- Figur 3: eine schematische Ansicht einer dritten Ausführungsform in ähnlicher Darstellung wie in Figur 1;
- Figur 4: eine Draufsicht in vergrößerter Darstellung auf eine Ausführungsform gemäß der Erfindung;
- Figur 5: eine Draufsicht in vergrößerter Darstellung auf eine alternative Ausführungsform gemäß der Erfindung;
- Figur 6: Eine Draufsicht in vergrößerter Darstellung auf eine weitere Ausführungsform gemäß der Erfindung;
- Figur 7: eine schematische Ansicht, teilweise geschnitten, einer erfindungsgemäßen Ausführungsform eines Kettenrades mit Segmentantrieb;
- Figur 8: eine schematische Seitenansicht, teilweise geschnitten, einer erfindungsgemäßen Ausführungsform eines Kettenrades mit Umschlingungsantrieb;
- Figur 9: eine Draufsicht in vergrößerter Darstellung auf eine Ausführungsform einer Doppelstrangkette gemäß der Erfindung;
- Figur 10: eine Draufsicht in vergrößerter Darstellung auf eine Ausführungsform einer Mehrstrangkette gemäß der Erfindung;
- Figur 11: eine Draufsicht in vergrößerter Darstellung auf eine Ausführungsform einer Multiplexkette gemäß der Erfindung;
- Figur 12: eine Schnittdarstellung durch die Figur 4; und
- Figur 13: eine weitere Schnittdarstellung durch Figur 4.

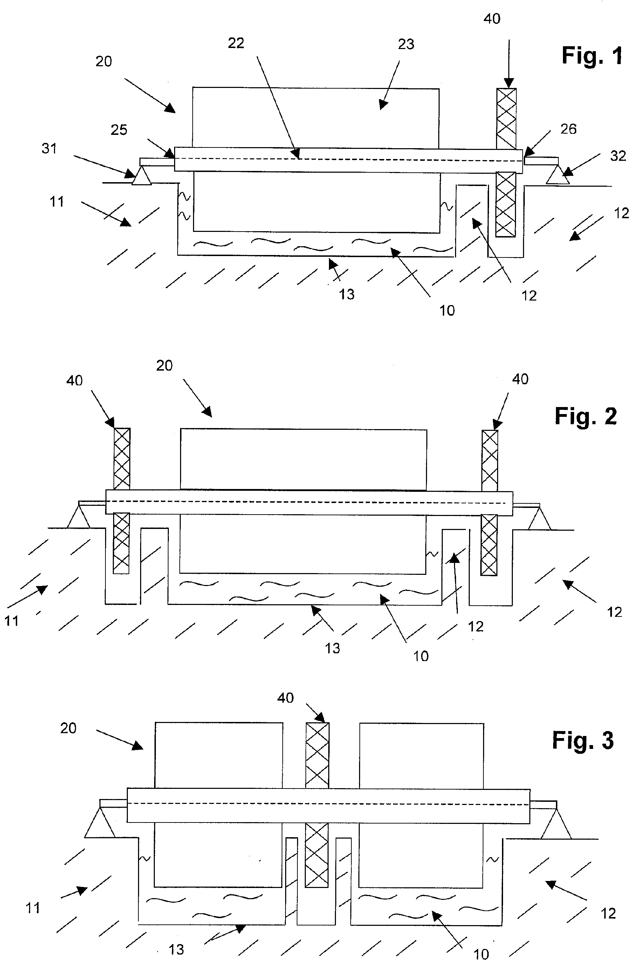

In der Figur 1 ist ein Schnitt durch ein Gewässer mit fließendem Wasser 10 schematisch dargestellt. Das fließende Wasser 10 strömt hier senkrecht zur Bildebene und das Gewässer ist beispielsweise ein Fluss. Zu erkennen sind auf der linken Seite das Flussufer 11 und auf der rechten Seite das Flussufer 12 sowie zwischen diesen beiden der Boden 13 des Flusses sowie das fließende Wasser 10 selbst.

Ferner ist an dieser Stelle des Flusses mit dem fließenden Wasser 10 ein Schaufelwasserrad 20 angeordnet. Zu erkennen ist eine Welle 21 mit einer Drehachse 22, um die die Welle 21 sich drehen kann. An der Welle 21 sind Schaufeln 23 befestigt, von denen hier schematisch eine nach oben ragende Schaufel 23 und eine nach unten in das Wasser 10 ragende Schaufel 23 dargestellt sind. Die Schaufeln 23 sind hier rein schematisch dargestellt. Ihr Aufbau, ihre Stellung und ihre Anordnung etwa an einem sich drehenden Gerüst sind hier zum besseren Verständnis weggelassen.

Auf dem linken Flussufer 11 ist ein Lager 31 und auf dem rechten Flussufer 12 ein Lager 32 vorgesehen. Diese beiden Lager 31, 32 sind jeweils nur schematisch angedeutet; diese stützen die Welle 21 ab.

Ferner angedeutet ist eine Vorrichtung 40 zur Abnahme der Energie von der sich drehenden Welle 23.

Während derartige Vorrichtungen 40 herkömmlich stets auf der von den Schaufeln 23 abgewandten Seite der Lager 31, 32 vorgesehen waren, sind sie hier zwischen den Lagern, genauer gesagt benachbart zum Lager 32 vorgesehen. Die Vorrichtung 40 ist zwischen dem Flussufer 12 und dem Lager 32 angeordnet. Das bedeutet, dass die Lager 31 und 32 einen größeren Abstand voneinander haben, als dies an sich durch die Breite des Gewässers mit dem fließenden Wasser 10 erforderlich gewesen wäre.

Diese Vorrichtung 40 ist hier aus einem auf dem Mantel der Welle koaxial zur Drehachse 22 angeordneten Kettenrad, Zahnrad, Zahnriemenrad beziehungsweise einem Riemenrad aufgebaut, das hier einen recht beträchtlichen Durchmesser aufweisen kann, aber auch anders aufgebaut sein könnte. In der Figur 1 wirkt es so, dass nicht nur der innere Durchmesser des Zahnrades oder Riemenrades der Vorrichtung 40 dem Aussendruchmesser der Welle 21 entspricht, sondern dass auch der äußere Durchmesser ebenso groß ist, wie der Durchmesser des Schaufelwasserrades 20. Dies ist zwar möglich, aber keineswegs Voraussetzung für das Funktionieren der Erfindung.

Von dieser Vorrichtung 40 zur Abnahme der Energie von der Welle 21 führt eine nicht weiter dargestellte Übertragungslinie, etwa ein Kettentrieb, zu einer Umwandlungsvorrichtung 50, beispielsweise einem Generator, der hier ebenfalls zur Verdeutlichung weggelassen ist.

Die Darstellung in der Figur 2 zeigt eine alternative Ausführungsform. Diese Ausführungsform kann beispielsweise gewählt werden, wenn das Gewässer mit dem fließenden Wasser 10 besonders breit ist und/oder auf beiden Seiten des Gewässers mit dem fließenden Wasser 10 jeweils Umwandlungsvorrichtungen 50 zur Umwandlung der potentiellen und kinetischen Energie des Wassers in beispielsweise elektrische Energie vorgesehen sind.

Zu sehen sind wiederum das fließende Wasser 10 zwischen den beiden Ufern 11 und 12, das Schaufelwasserrad 20 mit der Welle 21 und den Schaufeln 23, die in das fließende Wasser 10 eintauchen und die Lager 31 und 32 auf den beiden Ufern 11 und 12. Hier sind auf beiden Seiten der Schaufeln 23 des Schaufelwasserrades 20 jeweils Vorrichtungen 40 zur Abnahme der Energie benachbart zu den jeweiligen Lagern 31 und 32 angeordnet und können so abgegriffen werden. Dies ermöglicht eine gleichmäßigere Belastung der Gesamtkonstruktion.

In der Figur 3 ist eine weitere Konstruktion dargestellt, die unter Umständen durch die geographische Situation am Ort des Schaufelwasserrades 20 so gegeben sein könnte. In den Figuren 1 und 2 befindet sich hier wiederum fließendes Wasser 10 eines Gewässers zwischen zwei Ufern 11 und 12. Das Schaufelwasserrad 20 weist wiederum eine Welle 21 und eine Drehachse 22 auf. Die Welle 21 stützt sich auf den beiden Lagern 31 und 32 auf den Uferseiten 11 und 12 ab.

Hier befindet sich die Vorrichtung 40 zwischen einem zweigeteilten Satz von Schaufeln 23 an der Welle 21 des Schaufelwasserrades. Dies erschwert natürlich die Energieabnahme und die Übertragung von der Vorrichtung 40 zur Umwandlungsvorrichtung 50, weshalb man diese Konzeption nur wählen wird, wenn sie sich aus bestimmten Randbedingungen heraus empfiehlt.

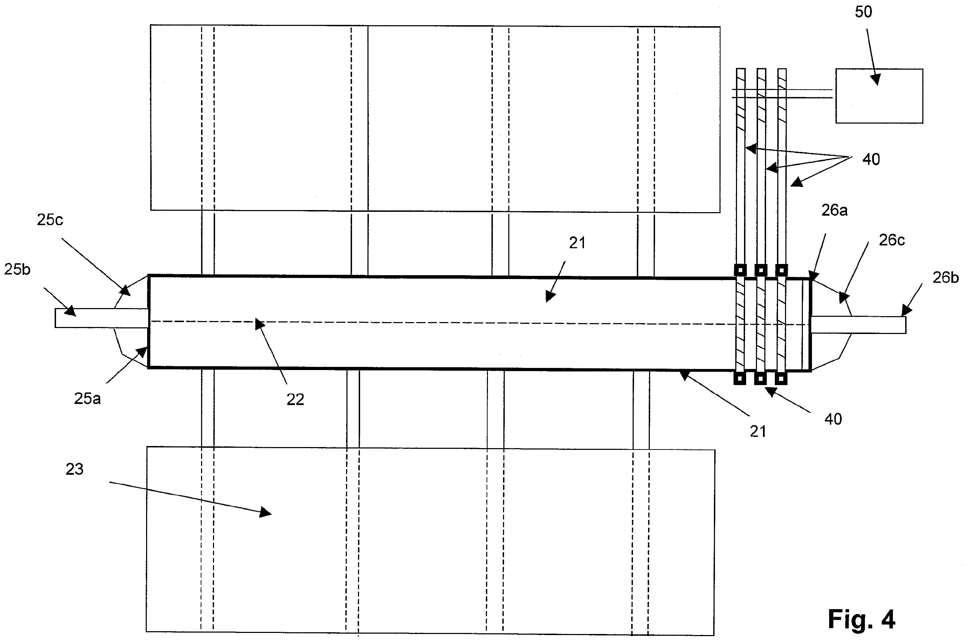

Die Figur 4 zeigt jetzt eine Draufsicht von oben auf eine Ausführungsform gemäß der Erfindung, wie sie etwa in der Figur 1 auch dargestellt ist. Die Darstellungen sind durchweg nicht maßstabsgerecht.

Zu erkennen ist eine Darstellung der erfindungsgemäßen Konzeption von oben, wobei sich eine ähnliche Darstellung auch von der Seite denken lässt, wobei hier das Gewässer mit dem fließenden Wasser 10, den Ufern 11 und 12 etc. fortgelassen ist.

Das Schaufelwasserrad 20 mit seiner Welle 21 und zwei Schaufeln 23 ist gut zu erkennen. Man sieht auch, dass die beiden Schaufeln 23 hier nicht unmittelbar an der Welle 21 ansetzen, sondern Teil eines Gerüstes oder Gestells oder skelettartigen Aufbaus sind. Die beiden Schaufeln 23 werden auch nicht in einer Ebene liegen, sondern können durchaus dreidimensional geformt und optimiert sein, um eine möglichst große Übertragung der kinetischen und potentiellen Energie des fließenden Wassers 10 auf die Drehbewegung der Welle 21 zu ermöglichen.

Die Welle 21 ist eine Hohlwelle und weist einen Mantel aus einem geschweißten Stahlprofil auf. Erfindungsgemäß können dafür Leitungsrohre verwendet werden, wie sie für die Fernleitungen von Fluidströmen (Wasser, Öl, Gas, etc.) verwendet werden und damit vergleichsweise preisgünstig als Fertigwaren zur Verfügung stehen. Auf diese Weise kann ein kostspieliger Einzelaufbau vermieden werden.

Fortgelassen in der Figur 4 sind unter anderem auch die Lager 31 und 32, die man sich hier jedoch links und rechts unterhalb der äußeren Wellenenden 25, 26 vorstellen kann.

Die Hohlwelle 21 selbst besitzt einen konstanten Durchmesser und ragt auf einer der beiden Seiten, nämlich hier auf der Seite des rechten Wellenendes 26 aus dem Bereich der Schaufeln 23 heraus. In diesem Bereich ist die Welle 21 in noch unverjüngtem Zustand außen mit der Vorrichtung 40 zur Abnahme der Energie von der Welle versehen. Diese kann mehrere parallel zueinander angeordnete Zahnleisten aufweisen. Von diesen Zahnleisten oder Zahnrädern führen Ketten oder Riemen, die ihrerseits ebenfalls Teil der Vorrichtung 40 sind, zu einer Umwandlungsvorrichtung 50, wobei dieser Teil der Anlage lediglich schematisch dargestellt ist. Die Umwandlungsvorrichtung 50 kann zum Beispiel ein Generator sein, der die ihm zur Verfügung gestellte Energie in elektrische Energie umwandelt.

Rein theoretisch denkbar wäre auch eine direkte Kraftabnahme des Generators beziehungsweise der Umwandlungsvorrichtung 50 an entsprechenden Elementen auf der Welle 23. Dann wäre diese Abnahmestelle die Vorrichtung zur Abnahme der Energie der Welle.

Zu erkennen ist auch die nähere Ausgestaltung des Wellenendes 26. Dieses besitzt eine Wellenkappe 26a. Diese Wellenkappe ist in Form einer Scheibe auf den Mantel der Welle aufgeschweißt, sie steht also senkrecht zur Drehachse 22.

Auf die Wellenkappe 26a ist ein Wellenzapfen 26b aufgeschweißt oder eingelassen. Dieser Wellenzapfen 26b befindet sich also in der Linie der Drehachse 22. Angedeutet ist ferner eine Radialversteifung 26c, mit der die Biegesteifigkeit und Torsionssteifigkeit der Wellenkappe 26a am Wellenende 26 so gesteigert werden kann, dass die auftretenden Momente und Kräfte noch besser umgesetzt werden können.

Die gegenüberliegende Seite der Welle 21 mit dem Wellenende 25 ist ähnlich aufgebaut. Hier befindet sich eine scheibenförmige Wellenkappe 25a mit einem Wellenzapfen 25b und einer Radialversteifung 25c.

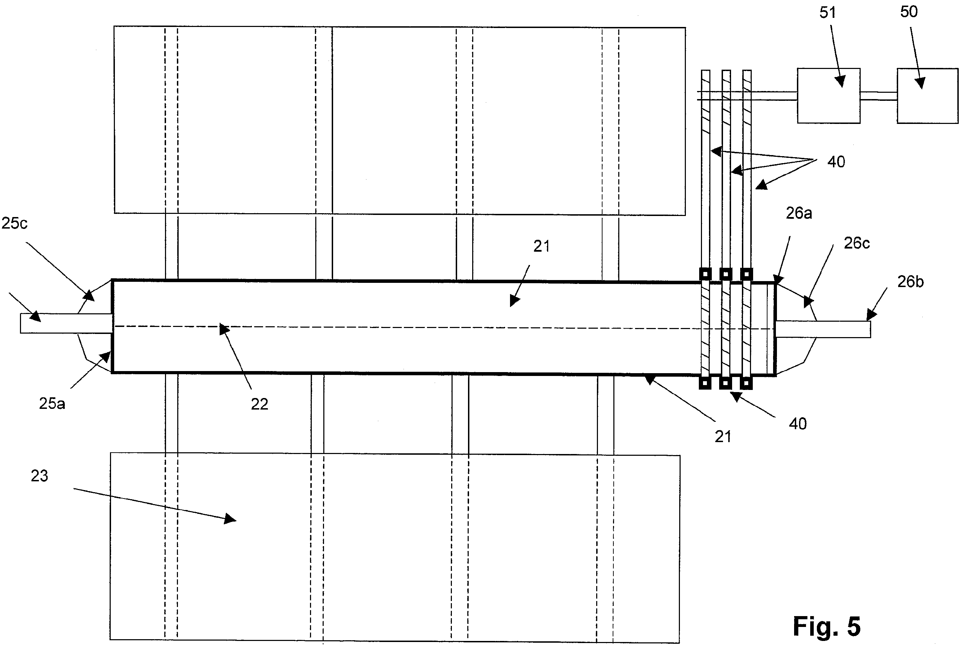

Die Figur 5 zeigt eine Draufsicht von oben auf eine alternative Ausführungsform gemäß der Erfindung, ähnlich wie in Figur 4. Die Darstellungen sind durchweg nicht maßstabsgerecht. Im Gegensatz zu Figur 4 ist in Figur 5 bei der Kraftabnahme der kinetischen Energie von der Welle der Umwandlungsvorrichtung 50 in eine andere Energieform eine mechanische Vorrichtung 51 vorgeschaltet, an die eine Umwandlungsvorrichtung 50 in eine andere Energieform angeschlossen sein kann.

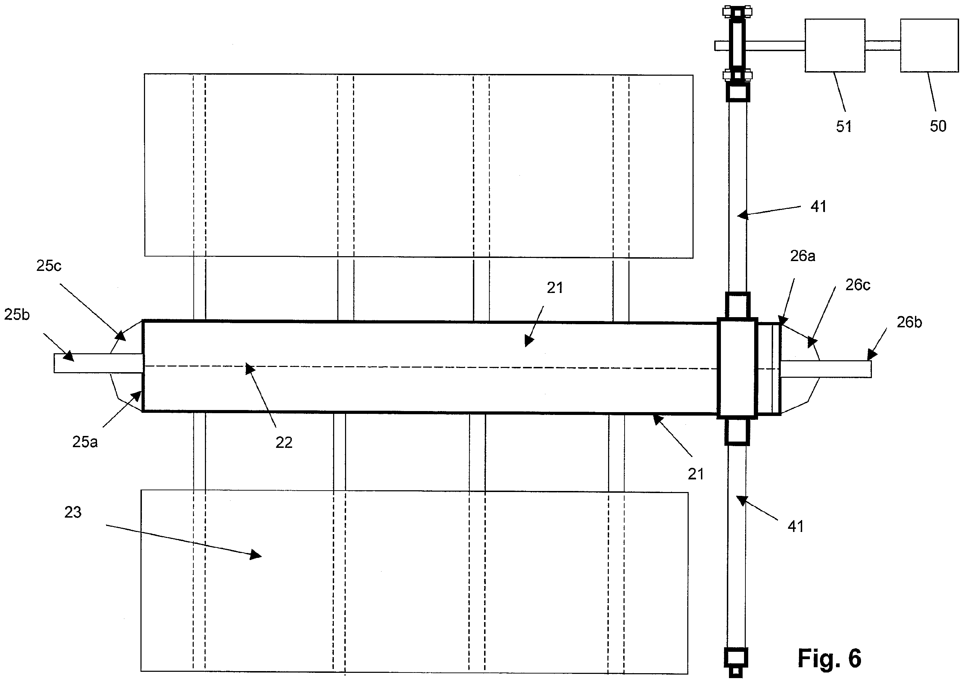

Die Figur 6 zeigt eine Draufsicht von oben auf eine weitere Ausführungsform gemäß der Erfindung, wie in Figur 4 und Figur 5. Die Darstellungen sind durchweg nicht maßstabsgerecht. Im Gegensatz zu Figur 4 und Figur 5 ist die Vorrichtung 40 zur Abnahme der kinetischen Energie von der Welle 21 des Schaufelwasserrades 20 ein Kettenrad 41 in Kombination mit einem Segmentantrieb 42 oder einem Umschlingungsantrieb 43.

Die Kette oder Ketten des Kettentriebes oder Kettentriebe der Vorrichtung 40 zur Abnahme der kinetischen Energie von der Welle 21 des Schaufelwasserrades 20 ist/sind eine oder mehrere Doppelstrangkette/n 44, Mehrstrangkette/n 45, Simplexkette/n 46 oder Multiplexkette/n 47. Der Kettentrieb führt zu einer Umwandlungsvorrichtung 50 in eine andere Energieform oder zu einer mechanischen Vorrichtung 51, an die eine Umwandlungsvorrichtung 50 in eine andere Energieform angeschlossen sein kann.

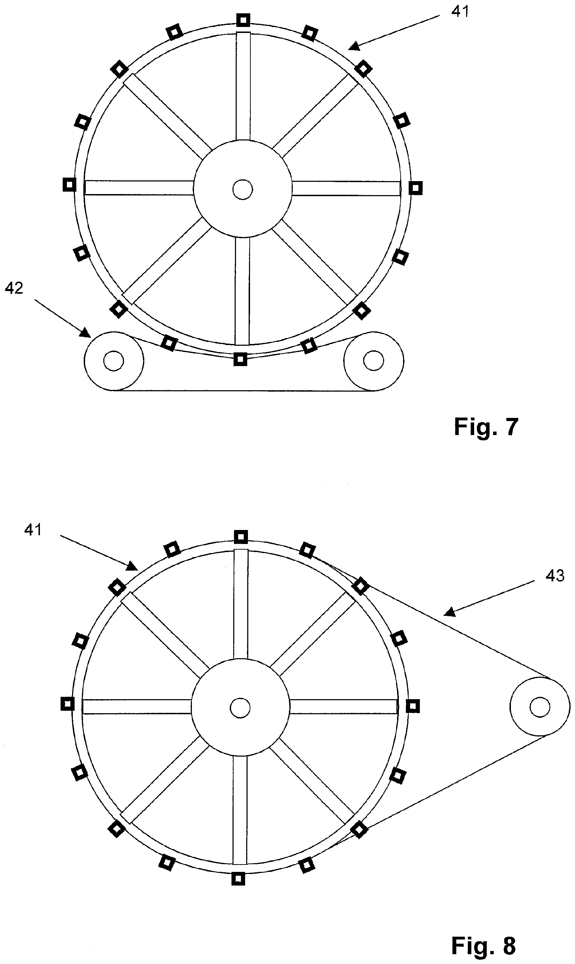

Die Figur 7 zeigt eine schematische Seitenansicht, teilweise geschnitten, einer erfindungsgemäßen Ausführungsform eines Kettenrades 41 mit einem Segmentantrieb 42.

Die Figur 8 zeigt eine schematische Seitenansicht, teilweise geschnitten, einer erfindungsgemäßen Ausführungsform eines Kettenrades 41 mit einem Umschlingungsantrieb 43.

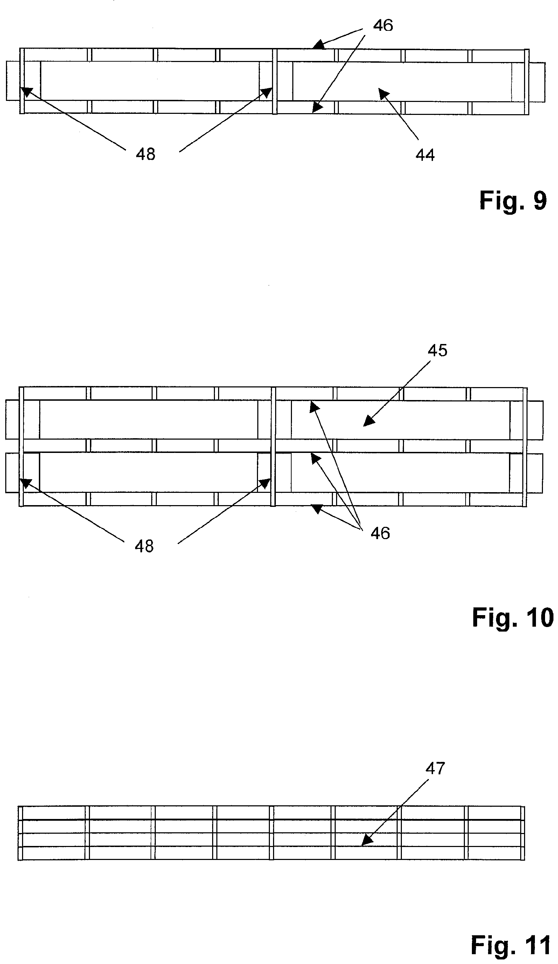

Die Figur 9 zeigt eine schematische Draufsicht in vergrößerter Darstellung, teilweise geschnitten, einer Doppelstrangkette 44 gemäß einer Ausführungsform der Erfindung. Die Doppelstrangkette 44, die zwei herkömmliche Ketten - auch als Simplexketten 46 bezeichnet - mittels Bolzen 48 verbindet, bildet dabei die Kette für das große Kettenrad, wobei die Bolzen einen größeren Teilungsabstand als die herkömmlichen Ketten - auch als Simplexketten 46 bezeichnet - aufweisen.

Die Figur 10 zeigt eine schematische Draufsicht in vergrößerter Darstellung, teilweise geschnitten, einer Mehrstrangkette 45 gemäß einer Ausführungsform der Erfindung. Der Aufbau ist hierbei ähnlich der Doppelstrangkette 44, wobei aber mehrere Simplexketten 46 über Bolzen 48 zu den Mehrstrangketten 47 verbunden sein können.

Die Figur 11 zeigt eine schematische Draufsicht in vergrößerter Darstellung, teilweise geschnitten, einer Multiplexkette 47 gemäß einer Ausführungsform der Erfindung. Eine Multiplexkette 47 baut sich aus mehreren mit einander verbundenen zueinander parallel verlaufenden Kettengliedern auf.

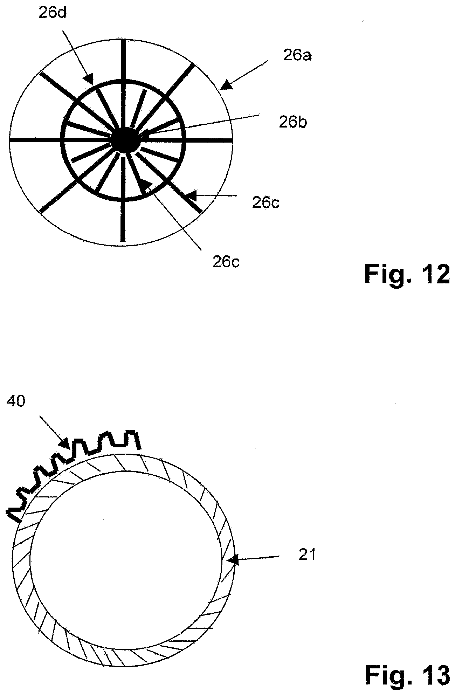

In der Figur 12 ist der Bereich der Welle 21 im Bereich des Wellenendes 26 dargestellt. Man sieht hier im Schnitt, mit welchen Elementen eine Verjüngung vom unverjüngten Durchmesser der Hohlwelle auf den von dem Lager 32 aufgenommenen Bereich des Wellenzapfens 26b stattfindet.

In dieser vergrößerten Darstellung kann man zusätzlich den Aufbau des Wellenendes 26 gut erkennen. Man sieht flach auf die Wellenkappe 26a, von der sich mittig der Wellenzapfen 26b auf den Betrachter zu erstreckt. Der Wellenzapfen 26b ist über Radialversteifungen 26c mit der Wellenkappe 26a verbunden. Zusätzlich sind hier auch noch Ringversteifungen 26d vorgesehen.

In der Figur 13 ist der Bereich der Welle 21 im Schnitt zu sehen, an dem die Vorrichtung zur Abnahme der Energie von der Welle vorgesehen ist, mit der die Abnahme der Energie von der sich drehenden Welle 21 stattfindet. Angedeutet ist der geschweißte Stahlmantel der Hohlwelle 21 und darauf eine Zahnleiste, die ein Teil der Vorrichtung 40 zur Abnahme der Energie der Welle 21 ist.

### Bezugszeichenliste

- 10: fließendes Wasser
- 11: Ufer
- 12: Ufer
- 13: Boden des Gewässers

- 20: Schaufelwasserrad
- 21: Welle
- 22: Achse der Welle
- 23: Schaufeln
- 25: Wellenende
- 25a: Wellenkappe
- 25b: Wellenzapfen
- 25c: Radialversteifung
- 26: Wellenende
- 26a: Wellenkappe
- 26b: Wellenzapfen
- 26c: Radialversteifung
- 26d: Ringversteifung

- 31: Lager
- 32: Lager

- 40: Vorrichtung zur Abnahme der Energie von der Welle
- 41: Kettenrad
- 42: Segmentantrieb
- 43: Umschlingungsantrieb
- 44: Doppelstrangkette
- 45: Mehrstrangkette
- 46: Simplexkette
- 47: Multiplexkette
- 48: Bolzen

- 50: Umwandlungsvorrichtung
- 51: Mechanische Vorrichtung

## Patentansprüche

1. Einrichtung zur Nutzung von Wasserkraft bei der Energiegewinnung, mit einem Schaufelwasserrad (20) mit einer Welle (21) und mit an der Welle (21) mittelbar oder unmittelbar angeordneten und mit dieser drehbaren Schaufeln (23), die vom fließenden Wasser (10) in eine Drehbewegung um die Achse (22) der Welle (21) versetzbar sind,
mit Lagern (31, 32) für die Welle (21) des Schaufelwasserrades (20) platzierbar auf beiden Seiten auf dem Ufer des fließenden Wassers (10) oder wasserführenden Querschnitts,
mit einer Vorrichtung (40) zur Abnahme der kinetischen Energie der sich drehenden Welle (21) und zur mittelbaren oder unmittelbaren Übertragung zu einer Umwandlungsvorrichtung (50) in eine andere Energieform, **dadurch gekennzeichnet, dass** die Welle (21) des Schaufelwasserrades (20) als Hohlwelle ausgebildet ist, und
bei dem die Vorrichtung (40) zur Abnahme der kinetischen Energie zwischen den Lagern (31, 32) für die Welle des Schaufelwasserrades (20) angeordnet ist.

2. Einrichtung nach Anspruch 1,
**dadurch gekennzeichnet,**
**dass** die Vorrichtung (40) zur Abnahme der kinetischen Energie dicht benachbart bei einem der Lager (31, 32) für die Welle (21) des Schaufelwasserrades (20) angeordnet ist.

3. Einrichtung nach Anspruch 2,
**dadurch gekennzeichnet,**
**dass** die Vorrichtung (40) zur Abnahme der kinetischen Energie zwischen dem Ufer (12) des fließenden Wassers (10) oder der Seitenwand des wasserführenden Querschnittes und dem Lager (32) auf dieser Seite des Ufers oder der Seitenwand (12) angeordnet ist.

4. Einrichtung nach Anspruch 3,
**dadurch gekennzeichnet,**
**dass** die Vorrichtung (40) zur Abnahme der kinetischen Energie ein oder mehrere koaxial zur Drehachse (22) der Welle (21) angeordnete Zahnräder, Kettenräder oder Riemenräder aufweist.

5. Einrichtung nach Anspruch 4,
**dadurch gekennzeichnet,**
**dass** die Vorrichtung (40) zur Abnahme der kinetischen Energie von der Welle (21) auf der Welle (21) aufgebrachte Zahnleisten, Zahnriemenräder oder Zahnsegmente einerseits und auf diesen Zahnleisten, Zahnriemenrädern oder Zahnsegmenten andererseits laufende Ketten oder Riemen aufweist.

6. Einrichtung nach Anspruch 4 oder 5,
**dadurch gekennzeichnet,**
**dass** die Vorrichtung (40) zur Abnahme der kinetischen Energie der sich drehenden Welle (21) und zur mittelbaren oder unmittelbaren Übertragung einen Kettentrieb, Doppelstrangketten (44), Mehrstrangketten (45), Simplexketten (46), Multiplexketten (47), einen Riementrieb, einen Umschlingungsantrieb (48) und/oder einen Segmentantrieb (42) aufweist.

7. Einrichtung nach Anspruch 6,
**dadurch gekennzeichnet,**
**dass** bei der Kette des Kettentriebes der Vorrichtung (40) zur Abnahme der kinetischen Energie von der Welle (21) des Schaufelwasserrades (20) die Bolzen (48), welche die Simplexketten (46) beziehungsweise Multiplexketten (47) zu Doppelstrang- beziehungsweise Mehrstrangketten verbinden, einen größeren Abstand der Teilung besitzen, als die Simplexbeziehungsweise Multiplexketten selbst geteilt sind.

8. Einrichtung nach einem der Ansprüche 4 bis 7,
**dadurch gekennzeichnet,**
**dass** die Größe des Durchmessers des Kettenrades (41), Zahnriemenrades, Riemenrades oder Zahnrades der Vorrichtung (40) zur Abnahme der kinetischen Energie im Bereich der Größe des Durchmessers des Schaufelwasserrades (20) oder größer als dieser ist.

9. Einrichtung nach einem der vorstehenden Ansprüche,
**dadurch gekennzeichnet,**
**dass** die Welle (21) mit einem geschweißten Stahlrohr als Mantel aufgebaut wird.

10. Einrichtung nach Anspruch 9,
**dadurch gekennzeichnet,**
**dass** die Welle (21) aus einem Hohlprofil aus dem Transportleitungsbau gefertigt ist.

11. Einrichtung nach einem der vorstehenden Ansprüche,
**dadurch gekennzeichnet,**
**dass** die Welle (21) sich von dem Bereich der Schaufeln (23) bis hin zur Vorrichtung (40) zur Abnahme der kinetischen Energie nicht verjüngt.

12. Einrichtung nach einem der vorstehenden Ansprüche,
**dadurch gekennzeichnet,**
**dass** die Umwandlungsvorrichtung (50) einen Generator aufweist.

13. Einrichtung nach einem der vorstehenden Ansprüche,
**dadurch gekennzeichnet,**
**dass** die mechanische Vorrichtung (51) ein Getriebe aufweist.

14. Einrichtung nach einem der vorstehenden Ansprüche,
**dadurch gekennzeichnet,**
**dass** die Welle (21) an den Wellenenden (25, 26) jeweils eine Wellenkappe (25a, 26a) aufweist,
**dass** eine, mehrere oder alle Wellenkappen (25a, 26a) jeweils mit einem Wellenzapfen (25b, 26b) versehen sind, und dass die Wellenkappen (25a, 26a) über Radialversteifungen (25c, 26c) und/oder Ringversteifungen (25d, 26d) auf die Wellenzapfen (25b, 26b) verjüngt werden.

15. Einrichtung nach Anspruch 14,
**dadurch gekennzeichnet,**
**dass** der oder die Wellenzapfen (25b, 26b) mit der oder den Wellen kappe(n) (25a, 26a) jeweils geschmiedet, verschweißt, gegossen oder eingelassen ist.

16. Einrichtung nach einem der vorstehenden Ansprüche,
**dadurch gekennzeichnet,**
**dass** das Schaufelwasserrad (20) nach Zuppinger Bauart aufgebaut und angeordnet ist.

17. Einrichtung nach einem der vorstehenden Ansprüche,
**dadurch gekennzeichnet,**
**dass** die Vorrichtung (40) zur Abnahme der kinetischen Energie mehrere Teilvorrichtungen aufweist, die parallel wirken und benachbart oder beabstandet zueinander koaxial auf der Welle (21) angeordnet sind.

## Claims

1. Device for using water power for energy generation,
having a bladed waterwheel (20) having a shaft (21) and having blades (23) arranged indirectly or directly on the shaft (21) and rotatable therewith, which, by the flowing water (10), can be brought into a rotary motion about the axis (22) of the shaft (21),
having bearings (31, 32) for the shaft (21) of the bladed waterwheel (20) placeable on both sides on the bank of the flowing water (10) or water-conducting cross-section,
having a device (40) for receiving the kinetic energy of the rotating shaft (21) and for the indirect or direct transference to a conversion device (50) into a different energy form,
**characterised in that**
the shaft (21) of the bladed waterwheel (20) is formed as a hollow shaft, and
in which the device (40) for receiving the kinetic energy is arranged between the bearings (31, 32) for the shaft of the bladed waterwheel (20).

2. Device according to claim 1,
**characterised in that**
the device (40) for receiving the kinetic energy is arranged closely adjoining one of the bearings (31, 32) for the shaft (21) of the bladed waterwheel (20).

3. Device according to claim 2,
**characterised in that**
the device (40) for receiving the kinetic energy is arranged between the bank (12) of the flowing water (10) or the side wall of the water-conducting cross-section and the bearing (32) on this side of the bank or the side wall (12).

4. Device according to claim 3,
**characterised in that**
the device (40) for receiving the kinetic energy comprises one or more gearwheels, chain wheels or pulleys arranged coaxially with the rotation axis (22) of the shaft (21).

5. Device according to claim 4,
**characterised in that**
the device (40) for receiving the kinetic energy from the shaft (21) comprises toothed strips, toothed belt pulleys or toothed segments mounted on the shaft (21,) on one side, and chains or belts running on said toothed strips, toothed belt pulleys or toothed segments, on the other side.

6. Device according to claim 4 or 5,
**characterised in that**
the device (40) for receiving the kinetic energy of the rotating shaft (21) and for the indirect or direct transference comprises a chain drive, double-strand chains (44), multi-stranded chains (45), simplex chains (46), multiplex chains (47), a belt drive, a looped drive (48) and/or a segmented drive (42).

7. Device according to claim 6,
**characterised in that**
with the chain of the chain drive of the device (40) for receiving the kinetic energy from the shaft (21) of the bladed waterwheel (20), the pins (48) which connect the simplex chains (46) or the multiplex chains (47) to double-stranded or multi-stranded chains have a greater pitch than the simplex or multiplex chains themselves are subdivided.

8. Device according to one of the claims 4 to 7,
**characterised in that**
the size of the diameter of the chain wheel (41), toothed belt pulley, pulley or gearwheel of the device (40) for receiving the kinetic energy is in the region of the size of the diameter of the bladed waterwheel (20) or greater than it.

9. Device according to one of the preceding claims,
**characterised in that**
the shaft (21) is constructed with a welded steel tube as a casing.

10. Device according to claim 9,
**characterised in that**
the shaft (21) is produced from a hollow profile from pipeline construction.

11. Device according to one of the preceding claims,
**characterised in that**
the shaft (21) does not taper from the region of the blades (23) toward the device (40) for receiving the kinetic energy.

12. Device according to one of the preceding claims,
**characterised in that**
the conversion device (50) comprises a generator.

13. Device according to one of the preceding claims,
**characterised in that**
the mechanical device (51) comprises a gearing mechanism.

14. Device according to one of the preceding claims,
**characterised in that**
the shaft (21) has a shaft cap (25a, 26a) at each shaft end (25, 26),
**in that** one, a plurality, or all, of the shaft caps (25a, 26a) are each provided with a journal (25b, 26b) and **in that** the shaft caps (25a, 26a) are tapered by means of radial reinforcements (25c, 26c) and/or annular reinforcements (25d, 26d) to the journals (25b, 26b).

15. Device according to claim 14,
**characterised in that**
the journal or journals (25b, 26b) are each forged, welded or cast with or are set into the shaft cap or caps (25a, 26a).

16. Device according to one of the preceding claims,
**characterised in that**
the bladed waterwheel (20) is constructed and arranged according to the Zuppinger wheel design.

17. Device according to one of the preceding claims,
**characterised in that**
the device (40) for receiving the kinetic energy comprises a plurality of partial devices which act in parallel and are arranged adjoining or spaced from one another on the shaft (21).

## Revendications

1. Installation pour utiliser la force hydraulique dans la production d'énergie, avec une roue hydraulique à aubes (20) présentant un arbre (21) et des aubes (23) disposées indirectement ou directement sur l'arbre (21) et pouvant tourner avec celui-ci, qui peuvent être mises en mouvement rotatif autour de l'axe (22) de l'arbre (21) par l'eau courante (10),
avec des paliers (31, 32) pour l'arbre (21) de la roue hydraulique à aubes (20), qui peuvent être placés des deux côtés sur la berge de l'eau courante (10) ou de la section de passage d'eau,
avec un dispositif (40) pour prélever l'énergie cinétique de l'arbre tournant (21) et pour la transmettre indirectement ou directement à un dispositif de conversion (50) en une autre forme d'énergie,
**caractérisée en ce**
**que** l'arbre (21) de la roue hydraulique à aubes (20) est réalisé sous la forme d'un arbre creux, et
dans laquelle le dispositif (40) pour prélever l'énergie cinétique est disposé entre les paliers (31, 32) de l'arbre de la roue hydraulique à aubes (20).

2. Installation selon la revendication 1,
**caractérisée en ce**
**que** le dispositif (40) pour prélever l'énergie cinétique est disposé à proximité immédiate de l'un des paliers (31, 32) de l'arbre (21) de la roue hydraulique à aubes (20).

3. Installation selon la revendication 2,
**caractérisée en ce**
**que** le dispositif (40) pour prélever l'énergie cinétique est disposé entre la berge (12) de l'eau courante (10) ou la paroi latérale de la section de passage d'eau et le palier (32) de ce côté de la berge ou de la paroi latérale (12).

4. Installation selon la revendication 3,
**caractérisée en ce**
**que** le dispositif (40) pour prélever l'énergie cinétique présente une ou plusieurs roues dentées, roues à chaîne ou roues à courroie disposées coaxialement à l'axe de rotation (22) de l'arbre (21).

5. Installation selon la revendication 4,
**caractérisée en ce**
**que** le dispositif (40) pour prélever l'énergie cinétique de l'arbre (21) présente, d'une part, des barres dentées, des roues à courroie dentée ou des segments dentés montés sur l'arbre (21) et, d'autre part, des chaînes ou des courroies circulant sur ces barres dentées, roues à courroie dentée ou segments dentés.

6. Installation selon la revendication 4 ou 5,
**caractérisée en ce**
**que** le dispositif (40) pour prélever l'énergie cinétique de l'arbre tournant (21) et pour la transmettre indirectement ou directement présente un entraînement par chaîne, des chaînes à brin double (44), des chaînes à brins multiples (45), des chaînes simplex (46), des chaînes multiplex (47), un entraînement par courroie, un entraînement par enroulement (48) et/ou un entraînement par segments (42).

7. Installation selon la revendication 6,
**caractérisée en ce**
**que**, sur la chaîne de l'entraînement par chaîne du dispositif (40) pour prélever l'énergie cinétique de l'arbre (21) de la roue hydraulique à aubes (20), les axes (48) qui relient les chaînes simplex (46) ou les chaînes multiplex (47) pour former respectivement des chaînes à brin double ou à brins multiples ont un pas supérieur à celui des chaînes simplex ou multiplex elles-mêmes.

8. Installation selon l'une des revendications 4 à 7,
**caractérisée en ce**
**que** la dimension du diamètre de la roue à chaîne (41), de la roue à courroie dentée, de la roue à courroie ou de la roue dentée du dispositif (40) pour prélever l'énergie cinétique est de l'ordre de la dimension du diamètre de la roue hydraulique à aubes (20) ou est supérieure à celle-ci.

9. Installation selon l'une des revendications précédentes,
**caractérisée en ce**
**que** l'arbre (21) est réalisé avec un tube d'acier soudé comme enveloppe.

10. Installation selon la revendication 9,
**caractérisée en ce**
**que** l'arbre (21) est constitué d'un profilé creux provenant de la construction des conduites de transport.

11. Installation selon l'une des revendications précédentes,
**caractérisée en ce**
**que** l'arbre (21) ne s'effile pas de la zone des aubes (23) vers le dispositif (40) pour prélever l'énergie cinétique.

12. Installation selon l'une des revendications précédentes,
**caractérisée en ce**
**que** le dispositif de conversion (50) présente un générateur.

13. Installation selon l'une des revendications précédentes,
**caractérisée en ce**
**que** le dispositif mécanique (51) présente une transmission.

14. Installation selon l'une des revendications précédentes,
**caractérisée en ce**
**que** l'arbre (21) présente un chapeau d'arbre (25a, 26a) à chacune des extrémités d'arbre (25, 26),
**qu'**un, plusieurs ou tous les chapeaux d'arbre (25a, 26a) sont munis d'un tourillon d'arbre (25b, 26b) et que les chapeaux d'arbre (25a, 26a) s'effilent vers les tourillons d'arbre (25b, 26b) par l'intermédiaire de raidisseurs radiaux (25c, 26c) et/ou de raidisseurs annulaires (25d, 26d),

15. Installation selon la revendication 14,
**caractérisée en ce**
**que** le ou les tourillon(s) d'arbre (25b, 26b) sont forgés, soudés, coulés ou encastrés chacun avec le ou les chapeau(x) d'arbre (25a, 26a).

16. Installation selon l'une des revendications précédentes,
**caractérisée en ce**
**que** la roue hydraulique à aubes (20) est construite et disposée selon le type Zuppinger.

17. Installation selon l'une des revendications précédentes,
**caractérisée en ce**
**que** le dispositif (40) pour prélever l'énergie cinétique présente plusieurs dispositifs partiels qui agissent en parallèle et sont disposés coaxialement sur l'arbre (21) en étant adjacents ou espacés les uns des autres.
